(19) **Europäisches Patentamt / European Patent Office / Office européen des brevets**

(11) **EP 3 042 185 B1**

(12) **FASCICULE DE BREVET EUROPEEN**

(45) Date de publication et mention
de la délivrance du brevet:
**12.07.2017 Bulletin 2017/28**

(51) Int Cl.:
*G01N 23/04* [(2006.01)]  *G06T 7/41* [(2017.01)]
*G06T 7/00* [(2017.01)]  *F01D 5/28* [(2006.01)]

(21) Numéro de dépôt: **14767061.6**

(22) Date de dépôt: **29.08.2014**

(86) Numéro de dépôt international:
**PCT/FR2014/052146**

(87) Numéro de publication internationale:
**WO 2015/033044 (12.03.2015 Gazette 2015/10)**

(54) **PROCÉDÉ DE CARACTÉRISATION D'UNE PIÈCE EN MATÉRIAU COMPOSITE TISSÉ**

VERFAHREN ZUR CHARAKTERISIERUNG EINES TEILS AUS EINEM GEWEBTEN
VERBUNDSTOFF

METHOD FOR CHARACTERISING A PART MADE OF A WOVEN COMPOSITE MATERIAL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **06.09.2013 FR 1358601**

(43) Date de publication de la demande:
**13.07.2016 Bulletin 2016/28**

(73) Titulaire: **SAFRAN
75015 Paris (FR)**

(72) Inventeurs:
• **MORARD, Vincent
F-77550 Moissy-Cramayel (FR)**
• **PARRA, Estelle
F-77550 Moissy-Cramayel (FR)**
• **TOURAIS, David
F-77550 Moissy-Cramayel (FR)**

(74) Mandataire: **Desormiere, Pierre-Louis et al
Cabinet Beau de Loménie
158, rue de l'Université
75340 Paris Cedex 07 (FR)**

(56) Documents cités:
**FR-A1- 2 357 680**

• **RENÉE PANOZZO HEILBRONNER: "The autocorrelation function: an image processing tool for fabric analysis", TECTONOPHYSICS, vol. 212, no. 3-4, 1 octobre 1992 (1992-10-01), pages 351-370, XP055107479, ISSN: 0040-1951, DOI: 10.1016/0040-1951(92)90300-U**
• **HORST-ARTUR CROSTACK ET AL: "<title>Three-dimensional analysis of MMC microstructure and deformation by [mu]CT and FE simulations</title>", PROCEEDINGS OF SPIE, vol. 7078, 28 août 2008 (2008-08-28), page 70781I, XP055107427, ISSN: 0277-786X, DOI: 10.1117/12.795206**
• **E. ARCHER ET AL: "Internal strain measurement and impact response of three-dimensional angle interlock woven carbon fibre composites", JOURNAL OF REINFORCED PLASTICS AND COMPOSITES, vol. 32, no. 12, 19 février 2013 (2013-02-19), pages 912-924, XP055107414, ISSN: 0731-6844, DOI: 10.1177/0731684413475720**
• **SCOTT A E ET AL: "fibre fracture measurement in carbonepoxy laminates using high resolution computed tomography", COMPOSITES SCIENCE AND TECHNOLOGY, ELSEVIER, UK, vol. 71, no. 12, 10 juin 2011 (2011-06-10), pages 1471-1477, XP028258587, ISSN: 0266-3538, DOI: 10.1016/J.COMPSCITECH.2011.06.004 [extrait le 2011-06-22]**

**EP 3 042 185 B1**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

- **HUFENBACH W ET AL: "A test device for damage characterisation of composites based on in situ computed tomography", COMPOSITES SCIENCE AND TECHNOLOGY, ELSEVIER, UK, vol. 72, no. 12, 6 mai 2012 (2012-05-06), pages 1361-1367, XP028504212, ISSN: 0266-3538, DOI: 10.1016/J.COMPSCITECH.2012.05.007 [extrait le 2012-05-12]**

**Description**

Contexte technique

L'invention s'inscrit dans le domaine des procédés pour la caractérisation de matériaux et de structures, notamment des pièces pour les industries mécaniques, en matériau composite à renfort fibreux tissé. De telles pièces sont de plus en plus utilisées dans le domaine de l'aéronautique du fait de leur robustesse et de leur faible poids comparé à des pièces fabriquées avec d'autres matériaux. Ces pièces sont également faciles à fabriquer. Parmi les pièces concernées, les pièces de moteur sont particulièrement concernées, parmi lesquelles les aubes de turbine à gaz ou les carters.

Du fait de la structure particulière de ces pièces, dans lesquelles un renfort fibreux est enfoui au sein d'une matrice, il existe un besoin de pouvoir contrôler, à tout moment lors du processus industriel de production ou lors de l'utilisation de la pièce concernée, les caractéristiques du renfort fibreux tissé. Cela permet de connaître le niveau de fatigue ou d'usure de la pièce, et repérer d'éventuels défauts ou dégâts. Naturellement, le renfort tissé étant noyé dans la matrice, y accéder est délicat, et les méthodes connues sont en général destructrices, ce qui n'est pas satisfaisant dans un contexte de production et d'usage de ces pièces en grande série. On souhaite donc disposer de méthodes de caractérisation du renfort fibreux qui soient non destructrices.

La tomographie par rayons X (tomographie axiale calculée par ordinateur ou CT-scan) est une méthode connue d'inspection non destructrice de l'intérieur d'un objet. Elle consiste à mesurer, pour une série de plans, l'atténuation causée à un faisceau de rayons X par la matière. Une image en trois dimensions est ensuite reconstituée à partir des données recueillies dans chaque plan. Il est possible ensuite d'effectuer des coupes de l'image 3D pour visualiser la structure de la matière dans chaque plan de coupe.

Appliquée à une pièce en matériau composite avec un renfort tissé, une approche telle que décrite ci-dessus ne serait guère praticable, ou ne donnerait que peu de résultats satisfaisants. En effet, un renfort tissé est un objet de grande taille, comprenant une multitude de fils de chaîne, parallèles les uns aux autres, et de fils de trame, également parallèles les uns aux autres, ces deux ensembles de fils parallèles définissant les orientations principales ou directions caractéristiques du tissage. La distance moyenne entre les colonnes de fils de chaîne, et la distance moyenne entre les colonnes de fils de trame (distances inter-fils de chaîne et inter-fils de trame, ou encore distances inter-chaîne et inter-trame) sont des informations permettant de bien caractériser le renfort, dans une zone où le tissage est uniforme. Mais déterminer ces informations sur la base d'une coupe en deux dimensions d'une image 3D, ou sur la base de plusieurs de ces coupes, implique un travail fastidieux, difficilement automatisable. Il conviendrait pour le mener à bien de pointer les couches de fils de trame et les couches de fils de chaine, et d'en déduire leurs espacements. Une telle mesure est de nature à impliquer de la subjectivité de la part de l'opérateur, et à être perturbée par toutes sortes de bruits dans l'image. Qui plus est, en fonction de la forme de la pièce à étudier, la coupe à étudier pourrait être difficile à identifier, et il serait d'ailleurs nécessaire d'étudier plusieurs coupes pour obtenir des résultats fiables. L'industrialisation d'un tel processus ne serait donc pas aisée, si ce n'est pas impossible, à mettre en oeuvre.

Un appareil destiné à former des signaux représentatifs de la disposition spatiale relative des barres transversales d'un tartan est divulgué dans le document FR 2357680.

Définition de l'invention et avantages associés

Pour résoudre cette difficulté et proposer un procédé non destructif, facilement automatisable et procurant des résultats fiables, il est proposé un procédé de caractérisation d'une pièce en matériau composite tissé comprenant le calcul des valeurs d'autocorrélation d'une image en trois dimensions du volume de la pièce acquise dans une fenêtre d'observation, pour une pluralité de vecteurs de l'espace utilisés comme intervalle d'autocorrélation, puis la détection d'au moins un extremum local de la valeur d'autocorrélation sur une orientation principale (direction caractéristique) du tissage pour déterminer une moyenne dans la fenêtre d'observation de la distance entre fils parallèles voisins.

L'autocorrélation admet, par propriété, un unique maximum global, obtenu pour le vecteur nul. Pour des vecteurs parallèles aux directions caractéristiques du tissage, elle admet de plus des maxima locaux, qui se suivent sur une droite de l'espace des vecteurs parallèle à la direction caractéristique concernée. Ces maxima se visualisent sous la forme de lobes sur des coupes de l'espace des vecteurs. En détectant au moins un de ces maxima local (ou un minimum entre deux maxima consécutifs), on a accès, par sa distance avec le vecteur nul, à un multiple de la distance entre fils parallèles voisins. Si on a détecté le maximum local le plus proche du vecteur nul, on a un accès direct à la distance entre fils parallèles voisins.

Le procédé supprime la subjectivité introduite par une lecture visuelle des images du volume de la pièce par un opérateur, grâce à l'utilisation de l'autocorrélation. Par conséquent, le procédé est plus précis et fiable. La méthode est également, pour cette raison, peu sensible au bruit. Elle permet de mesurer les distances inter-chaînes et inter-trames dans la totalité de la pièce, de manière non destructrice, en exploitant les trois dimensions de l'image du volume de la pièce, alors qu'un opérateur humain travaille en général sur des coupes à deux dimensions de l'image du volume. Enfin, elle peut être automatisée, et est donc plus rapide que les méthodes utilisant une lecture par un opérateur humain. Au final, elle est à la fois plus précise et plus facile à mettre en oeuvre que les techniques n'utilisant pas l'autocorrélation.

On précise que le procédé s'applique à une image acquise par tomographie aux rayons X ou par une autre technique d'imagerie du volume d'une pièce. Notamment, il convient de garder à l'esprit qu'en dehors de l'utilisation des rayons X, d'autres méthodes de tomographie sont connues, telle la tomographie par RMN (résonnance magnétique nucléaire).

Dans un mode de réalisation très avantageux, le calcul des valeurs d'autocorrélation est effectué en utilisant le théorème de Wiener-Khinchin, c'est-à-dire en appliquant une fonction mathématique, composée de transformées de Fourrier directe et inverse et de la fonction module d'un nombre complexe, à l'image en trois dimensions de la pièce en matériau composite étudiée. Il s'agit là d'un processus simple, automatisable, et calculant de manière continue et exhaustive l'ensemble de la fonction d'autocorrélation, permettant ainsi une étude de grande qualité des valeurs d'autocorrélation, regroupées dans une « image » en trois dimensions dite image d'autocorrélation.

Dans un mode de réalisation particulier, le procédé comprend une détection d'une direction caractéristique du tissage dans la pluralité de vecteurs, par exemple dans l'image d'autocorrélation. Il s'agit là de repérer l'alignement des maxima locaux et globaux correspondant à une direction des fils de trame ou des fils de chaîne.

Dans un mode de réalisation, éventuellement combinable avec le précédent, le procédé comprend un recalage préalable de l'image 3D de la pièce en matériau composite pour aligner les axes du tissage (directions caractéristiques) avec les axes de l'image.

De manière à caractériser complètement la pièce, le procédé peut prévoir naturellement que l'on détecte des extrema pour la direction des fils de trame et pour la direction des fils de chaine, pour déterminer des moyennes dans la fenêtre d'observation respectivement des distances entre fils de trame voisins et entre fils de chaîne voisins. Néanmoins, le procédé peut être mis en oeuvre en ne s'intéressant qu'aux fils de trame, ou qu'aux fils de chaîne.

On précise que dans un mode de réalisation facile à mettre en oeuvre, les extrema utilisés sont des maxima, et qu'on peut s'intéresser notamment à des extrema consécutifs. Les extrema utilisés comprennent en général le maximum global obtenu pour le vecteur nul, mais il est aussi possible de s'en passer en étudiant deux extrema locaux consécutifs.

Le procédé est particulièrement proposé pour l'étude d'une pièce en matériau composite tissé en trois dimensions, et/ou pour une pièce comprenant des fibres de carbone dans une matrice de carbone. La pièce peut par exemple, être une aube ou un carter de moteur d'avion.

Même si l'invention est centrée sur l'analyse de l'image, on propose aussi le procédé qui comprend non seulement l'exploitation de l'image mais aussi son acquisition.

La description va maintenant être poursuivie en relation avec les figures annexées.

Liste des figures

La figure 1 montre un schéma de tissage 3D utilisé dans une pièce en matériau composite à renfort fibreux tissé.
La figure 2 est un organigramme montrant un mode de réalisation de l'invention.
La figure 3 est un rendu surfacique d'une coupe d'une image d'autocorrélation 3D d'une image 3D d'une pièce en matériau composite.
une image d'autocorrélation d'une image 3D de pièce en matériau composite.
Les figures 4 et 5 sont des courbes obtenues au cours des étapes finales du mode de réalisation de la figure 1.
La figure 6 est un organigramme montrant un deuxième mode de réalisation de l'invention.

Description détaillée d'un mode de réalisation de l'invention

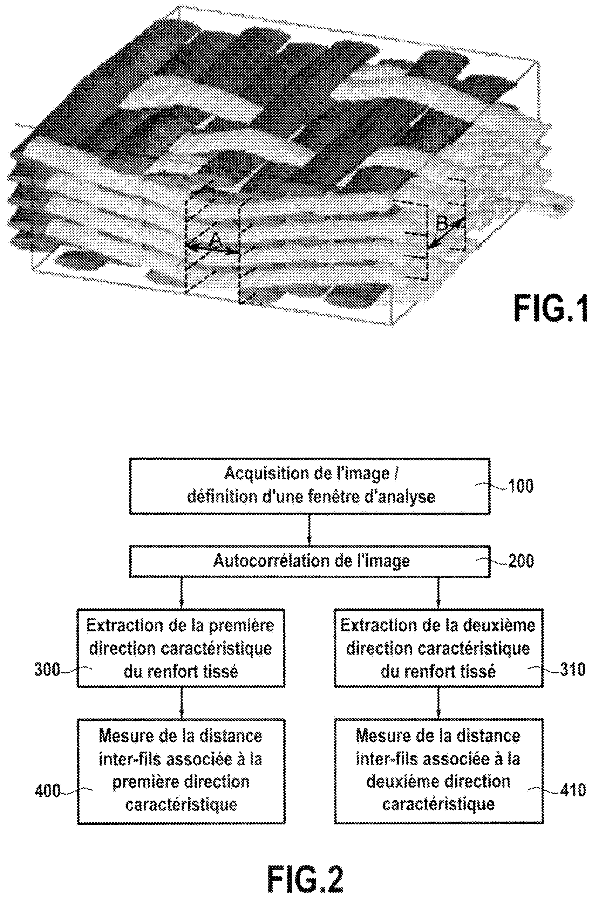

L'invention s'applique à des pièces en matériau composite à renfort fibreux tissé, le tissage étant effectué selon un schéma de tissage donné dans toute la pièce, ou éventuellement selon plusieurs schémas de tissage, ceux-ci étant séparés par des zones de transition. Le tissage peut être un tissage en deux dimensions, ou un tissage en trois dimensions, qui présente alors des avantages importants en matière de participation à la résistance mécanique de la pièce. Un schéma de tissage en trois dimensions est présenté en **Figure 1.** La distance inter-trame y est notée A et la distance inter-chaîne est notée B.

Qu'il soit à deux ou trois dimensions, le tissage est basé sur l'entrecroisement de fils de chaîne et de fils de trame, les fils de chaîne, parallèles les uns aux autres croisant les fils de trame également parallèles les uns aux autres. Pour un schéma de tissage donné, entre deux zones de transition, la distance entre deux fils de chaîne voisins est sensiblement constante et la distance entre deux fils de trame voisins est également sensiblement constante. Ces deux distances caractérisent, entre autres informations géométriques, le schéma de tissage ainsi que l'état de fatigue ou d'usure de la pièce.

En référence à la **figure 2**, on présente un mode de réalisation de l'invention, appliqué à une telle pièce en matériau composite, par exemple une pièce en matériau composé de fibres de carbone dans une matrice de carbone.

Au cours d'une étape 100, une image de la pièce est réalisée par tomographie aux rayons X. Pour mémoire, cela consiste à mesurer l'atténuation d'un faisceau de rayons X traversant l'objet, suivant différents plans de section de l'objet. Un ensemble de projections permet ensuite, par un traitement informatique de reconstituer une image en trois dimensions de l'intérieur de la pièce. Cette image est éventuellement filtrée pour atténuer les artéfacts d'acquisition et pour que le niveau de gris (intensité) attribué à chaque voxel de l'image 3D soit proportionnel à la densité de matière de la pièce au point concerné.

Une fois l'image obtenue, il convient de choisir une fenêtre d'analyse (ou fenêtre d'observation) portant sur la zone de la pièce dont on souhaite connaître les caractéristiques ou l'état de fatigue, et dans laquelle le schéma de tissage est constant (ou autrement dit, le tissage est uniforme).

Au cours d'une étape 200, on réalise alors l'autocorrélation de l'image 3D, limitée à la fenêtre d'observation choisie. On rappelle que l'autocorrélation d'un signal (que ce signal soit basé sur un ensemble à une ou plusieurs dimensions, discret ou continu) est la corrélation croisée de ce signal avec lui-même et qu'elle permet de détecter des régularités, des profils répétés dans le signal, ou une fréquence fondamentale du signal, quand celui-ci en comporte une.

Mathématiquement, l'autocorrélation C d'un signal x s'écrit

$$C_x(h) = \sum_{n=0}^{N} (x_n - m) - (x_{n-h} - m)$$

Avec m la valeur moyenne du signal x sur la fenêtre considérée. La somme est réalisée sur le nombre N d'éléments de x, dans le cas d'une fonction sur un ensemble discret, mais dans le cas d'une fonction sur un ensemble continu, elle est remplacée par une intégrale.

La fonction est calculée pour toutes les valeurs que peut prendre la valeur h, appelée intervalle d'autocorrélation (ou vecteur intervalle d'autocorrélation), dans l'ensemble de départ du signal.

Pour mémoire, la fonction C a un maximum global pour h = 0, quel que soit le signal x. On sait aussi que si x est périodique, C est également périodique, avec la même période que x.

Selon l'invention, on calcule la valeur de C pour un nombre aussi grand que possible des vecteurs h de l'image 3D. Cela est obtenu de manière exhaustive en faisant appel aux enseignements du théorème de Wiener-Khinchin, qui stipule que la fonction d'autocorrélation d'un processus stochastique stationnaire a une décomposition spectrale qui est donnée par sa densité spectrale de puissance. Ainsi, la fonction C peut être calculée de la manière suivante

$$C_x = TF^{-1}\big[|TF(x)|^2\big]$$

Avec TF la transformée de Fourier, et TF$^{-1}$ sa fonction inverse.

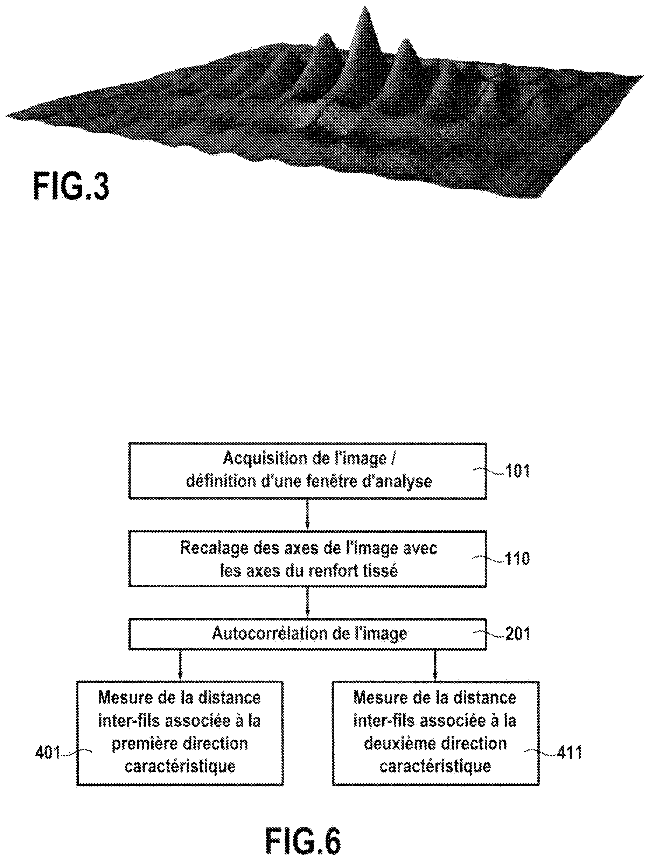

En appliquant cette formule à l'image 3D dans la fenêtre d'observation, on est en mesure d'obtenir l'ensemble des valeurs prises par la fonction d'autocorrélation pour tous les vecteurs compris dans l'image, moyennant un temps de calcul faible. On appelle cet ensemble l'image (en trois dimensions) de l'autocorrélation, puisqu'elle peut être visualisée comme une image, chaque vecteur h étant représenté par un point x,y,z et étant associé à une intensité C, qui peut par exemple être affichée sous la forme d'une luminosité ou d'une couleur. L'image de l'autocorrélation comprend plusieurs lobes, comme cela apparaît en **figure 3**, qui présente un rendu surfacique d'une coupe d'une image d'autocorrélation 3D d'une image 3D d'une pièce en matériau composite, la coupe étant prise selon un plan passant par le centre de l'image.

Le schéma de tissage dans la fenêtre d'observation étant périodique, l'autocorrélation admet des maxima locaux que l'on peut détecter pour mesurer les périodes du schéma de tissage. Cela implique tout d'abord d'extraire les deux directions caractéristiques du renfort tissé des valeurs d'autocorrélation. Cela est fait au cours des étapes 300 et 310. Il s'agit de détecter des alignements de maxima locaux dans l'image de l'autocorrélation, en prenant soin de rechercher ces alignements dans chacun des lobes de l'image. Les alignements doivent passer par le point h=0.

Une fois les directions caractéristiques du renfort tissé identifiées, la méthode se poursuit, pour chacune de ces deux directions, indépendamment de l'autre, par la mesure de la distance |h| (norme du vecteur h) entre deux maxima consécutifs, et plus précisément entre le point h = 0 et le premier maximum local suivant ce point sur la direction caractéristique identifiée à l'étape précédente.

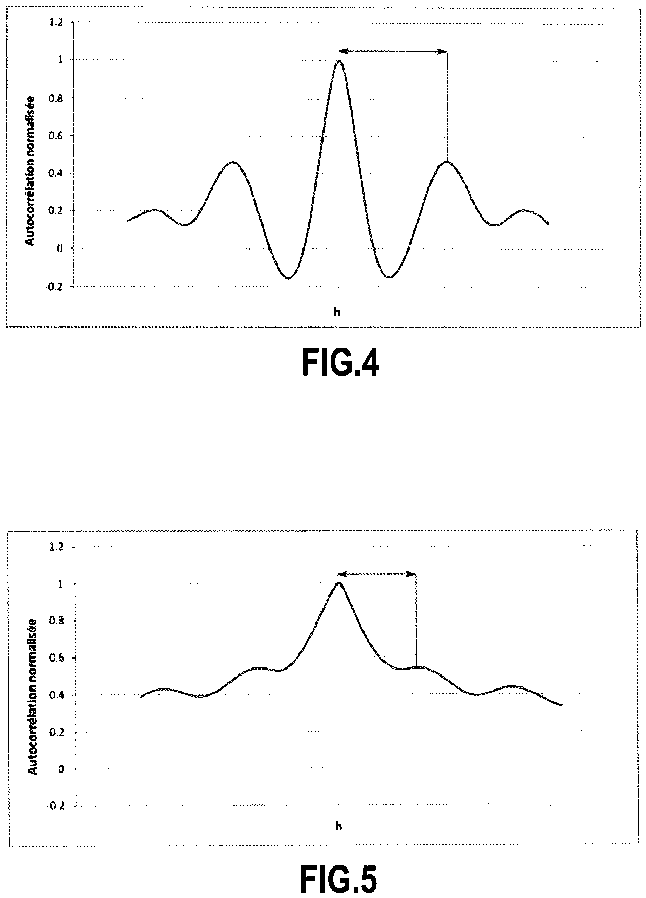

Cette nouvelle étape, représentée en figure 2 aux repères 400 et 410 est illustrée aux **figures 4 et 5**, qui présentent des courbes (profil 1D), avec en abscisse une valeur h de la coordonnée sur la droite correspondant à la direction caractéristique et en ordonnées la valeur d'autocorrélation (ici normalisée) au point correspondant dans l'image d'autocorrélation.

La valeur |h| entre deux maxima consécutifs constitue alors la distance inter-fils sur la direction caractéristique, qui est soit la direction des fils de trame, soit la direction des fils de chaîne. En figure 4, on a représenté la mesure de la distance inter-fils de trame, et en figure 5, la mesure de la distance inter-fils de chaîne.

On peut distinguer les directions trame et chaîne en corrélant le résultat de l'autocorrélation avec l'image initiale et la pièce.

Par exemple, si les colonnes de trame dont on souhaite mesurer l'espacement se situent suivant l'axe z, alors il faut regarder suivant l'axe z dans l'image de l'autocorrélation pour pouvoir mesurer cet espacement.

Une fois mesurée, cette distance est comparée aux valeurs attendues, pour permettre la caractérisation de la pièce et la détection d'une éventuelle anomalie.

En **figure 6**, une variante de la méthode est présentée. Elle implique, comme le mode de réalisation présenté en figure 2, de commencer par une étape 101 d'acquisition de l'image et de définition d'une fenêtre d'observation.

Celle-ci est suivie d'une étape 110 de recalage des axes de l'image 3D de la pièce avec les axes du renfort tissé, tels qu'observés sur l'image. Cela permet de prendre en compte les variabilités du tissage, d'une pièce à l'autre, et de l'acquisition de l'image, d'un processus d'imagerie à un autre.

On procède ensuite à l'autocorrélation de l'image, au cours de l'étape 201. On peut ensuite, si le recalage est de suffisamment bonne qualité, mesurer directement les distances inter-fils dans les deux directions caractéristiques identifiées comme étant les directions de l'image.

Il est également possible de combiner à la fois le recalage de l'image évoqué en lien avec la figure 6 et l'extraction des directions caractéristiques de l'image d'autocorrélation évoquée en lien avec la figure 2.

L'invention peut être mise en oeuvre avec des pièces de toute forme, en adaptant la fenêtre d'observation à une zone où le schéma de tissage est constant, puis en recommençant dans une zone voisine. Les dimensions de la fenêtre d'observation doivent éventuellement être réduites pour ne couvrir qu'une zone à tissage uniforme. La taille limite minimale est bien sûr dictée par les distances inter-fils.

L'invention n'est pas limitée à un mode de réalisation particulier, mais s'étend aux variantes dans le cadre de la portée des revendications.

## Revendications

1. Procédé de caractérisation d'une pièce en matériau composite tissé comprenant le calcul (200 ; 201) des valeurs d'autocorrélation d'une image en trois dimensions dans une fenêtre d'observation du volume de la pièce, pour une pluralité de vecteurs de l'espace utilisés comme intervalle d'autocorrélation, puis la détection (400, 410 ; 401, 411) d'au moins un extremum local de la valeur d'autocorrélation sur une orientation principale du tissage pour déterminer une moyenne dans la fenêtre d'observation de la distance entre fils parallèles voisins.

2. Procédé de caractérisation selon la revendication 1, dans lequel le calcul (200 ; 201) des valeurs d'autocorrélation est effectué en utilisant le théorème de Wiener-Khinchin.

3. Procédé de caractérisation selon la revendication 1 ou la revendication 2, comprenant une détection (300, 310) d'une orientation principale du tissage dans la pluralité de vecteurs.

4. Procédé de caractérisation selon l'une des revendications 1 à 3, comprenant un recalage (110) de l'image de la pièce pour aligner les orientations principales du tissage avec les axes de l'image.

5. Procédé de caractérisation selon l'une des revendications 1 à 4, dans lequel la détection d'au moins un extremum local (400, 410 ; 401, 411) est effectuée pour la direction des fils de trame et pour la direction des fils de chaine, pour déterminer des moyennes dans la fenêtre d'observation respectivement des distances entre fils de trame voisins et entre fils de chaîne voisins.

6. Procédé de caractérisation selon l'une des revendications 1 à 5, dans lequel la pièce est en matériau composite tissé en trois dimensions.

7. Procédé de caractérisation selon l'une des revendications 1 à 6, dans lequel la pièce comprend des fibres de carbone dans une matrice de carbone.

8. Procédé de caractérisation selon l'une des revendications 1 à 7, dans lequel l'image est une image de tomographie aux rayons X.

9. Procédé de caractérisation selon l'une des revendications 1 à 8, comprenant une étape d'acquisition de l'image à l'aide d'un appareil de tomographie.

## Patentansprüche

1. Verfahren zur Charakterisierung eines Teils aus gewebtem Verbundwerkstoff, umfassend die Berechnung (200; 201) der Autokorrelationswerte eines dreidimensionalen Bildes in einem Betrachtungsfenster des Volumens des Teils, für eine Vielzahl von Vektoren des Raums, die als Autokorrelationsbereich verwendet werden, anschließend die Erfassung (400, 410; 401, 411) wenigstens eines lokalen Extremums des Autokorrelationswertes auf einer Hauptausrichtung des Webens, um einen Mittelwert in dem Betrachtungsfenster des Abstandes zwischen benachbarten parallelen Fäden zu bestimmen.

2. Charakterisierungsverfahren nach Anspruch 1, bei dem die Berechnung (200; 201) der Autokorrelationswerte unter Verwendung des Wiener-Chintschin-Theorems durchgeführt wird.

3. Charakterisierungsverfahren nach Anspruch 1 oder Anspruch 2, umfassend eine Erfassung (300, 310) einer Hauptausrichtung des Webens in der Vielzahl von Vektoren.

**4.** Charakterisierungsverfahren nach einem der Ansprüche 1 bis 3, umfassend eine Neueinstellung (110) des Bildes des Teils, um die Hauptausrichtungen des Webens mit den Achsen des Bildes auszurichten.

**5.** Charakterisierungsverfahren nach einem der Ansprüche 1 bis 4, bei dem die Erfassung wenigstens eines lokalen Extremums (400, 410; 401, 411) für die Richtung der Schussfäden und für die Richtung der Kettfäden durchgeführt wird, um Mittelwerte in dem Betrachtungsfenster jeweils der Abstände zwischen benachbarten Schussfäden und zwischen benachbarten Kettfäden zu bestimmen.

**6.** Charakterisierungsverfahren nach einem der Ansprüche 1 bis 5, bei dem das Teil aus dreidimensional gewebtem Verbundwerkstoff besteht.

**7.** Charakterisierungsverfahren nach einem der Ansprüche 1 bis 6, bei dem das Teil Kohlenstofffasern in einer Kohlenstoffmatrix umfasst.

**8.** Charakterisierungsverfahren nach einem der Ansprüche 1 bis 7, bei dem das Bild ein Röntgentomographiebild ist.

**9.** Charakterisierungsverfahren nach einem der Ansprüche 1 bis 8, umfassend einen Schritt zur Erfassung des Bildes mit Hilfe eines Tomographiegerätes.

**Claims**

**1.** A method of characterizing a part made of woven composite material, the method comprising calculating (200; 201) autocorrelation values of a three-dimensional image in an observation window of the volume of the part for a plurality of spatial vectors used as the autocorrelation interval, and then in detecting (400, 410; 401, 411) at least one local extremum in the autocorrelation value on a main orientation of the weaving in order to determine a mean in the observation window for the distance between neighboring parallel yarns.

**2.** A characterization method according to claim 1, wherein the autocorrelation values are calculated (200; 201) by using the Wiener-Khinchin theorem.

**3.** A characterization method according to claim 1 or claim 2, including detecting (300, 310) a main weaving orientation in the plurality of vectors.

**4.** A characterization method according to any one of claims 1 to 3, including realigning (110) the image of the part so as to align the main orientations of the weaving with the axes of the image.

**5.** A characterization method according to any one of claims 1 to 4, wherein at least one local extremum is detected (400, 410; 401, 411) for the weft yarn direction and for the warp yarn direction in order to determine means in the observation window respectively for the distances between neighboring weft yarns and between neighboring warp yarns.

**6.** A characterization method according to any one of claims 1 to 5, wherein the part is made of three-dimensionally woven composite material.

**7.** A characterization method according to any one of claims 1 to 6, wherein the part comprises carbon fibers in a carbon matrix.

**8.** A characterization method according to any one of claims 1 to 7, wherein the image is an X-ray tomography image.

**9.** A characterization method according to any one of claims 1 to 8, including a step of acquiring the image by using a tomography appliance.

FIG.1

| Acquisition de l'image / définition d'une fenêtre d'analyse | ~100 |

Autocorrélation de l'image ~200

| Extraction de la première direction caractéristique du renfort tissé | Extraction de la deuxième direction caractéristique du renfort tissé |

300

310

| Mesure de la distance inter-fils associée à la première direction caractéristique | Mesure de la distance inter-fils associée à la deuxième direction caractéristique |

400

410

FIG.2

8

FIG.3

| Acquisition de l'image / définition d'une fenêtre d'analyse | ~101 |

| Recalage des axes de l'image avec les axes du renfort tissé | ~110 |

| Autocorrélation de l'image | ~201 |

| Mesure de la distance inter-fils associée à la première direction caractéristique | Mesure de la distance inter-fils associée à la deuxième direction caractéristique |

401 ~ | ~ 411

FIG.6

**FIG.4**

**FIG.5**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2357680